# EUROPEAN PATENT SPECIFICATION

(11) **EP 4 305 957 B1**
(45) Date of publication and mention of the grant of the patent: **28.10.2026**
(21) Application number: 23204643.3
(22) Date of filing: 14.11.2017
(51) Int. Cl.: A01K 61/60, A01K 61/13

(54) **SUBMERSIBLE MARINE FISH PEN ARRANGEMENT AND METHOD**
TAUCHFÄHIGE MARINE FISCHPENANORDNUNG UND VERFAHREN
AGENCEMENT DE PECHE A POISSONS MARIN SUBMERSIBLE ET PROCEDE

(30) Priority: 15.11.2016 NO 20161802
(43) Date of publication of application: 17.01.2024
(60) Divisional application: 25186371.8 / 4 620 298
(62) Document number(s) of the earlier application(s) in accordance with Art. 76 EPC: 17801665.5 / 3 541 174
(73) Proprietor: Marine Constructions AS, 5210 OS (NO)
(72) Inventor: GRYTDAL, Andreas, 5215 Lysekloster (NO); AASEN, Kjell, Audun, 1397 Nesøya (NO)
(74) Representative: Acapo Onsagers AS

(56) References cited:
- WO-A1-2006/063412
- WO-A1-2014/032199
- WO-A1-2017/153417
- WO-A1-93/04576
- AU-A1- 2014 201 866
- CN-A- 103 026 991
- JP-A- 2015 173 627
- KR-A- 20090 096 843
- US-A- 4 408 454
- US-A- 5 193 481
- US-A- 5 617 813
- US-A1- 2016 183 501
- BRUUN PER KRISTIAN: "From Offshore Oil and Gas to Arctic Offshore Farming - Making the Transition", OFFSHORE NORTHERN SEAS (ONS) CONFERENCE, 1 September 2016 (2016-09-01), XP093196467
- NORWAY ROYAL SALMON: "Arctic Offshore Farming", 17 March 2016 (2016-03-17), XP093196464, Retrieved from the Internet <URL:https://www.youtube.com/watch?v=V1ON7NMHL5s> [retrieved on 20250217]

## Description

### Field of the invention

The present invention concerns a fish pen, more specifically a submergible sea fish pen having a double net wall and a roof, for use in the aqua culture industry.

### Background of the invention

Fish escaping from fish pens in aqua culture facilities are a known problem. In addition, infesting sea lice in the upper water column, and challenges caused by deformation of the pen net during times of high wave activity and current, are known problems.

It is known to construct fish pens with a double net wall. However, known constructions are constructed such that the two layers of nets are arranged close to each other, for example mounted on each side of the buoyancy collar. These have to be installed separately, and when there is a current present, they will be in contact with each other, which may cause abrasion and damage to the net wall.

The following prior art can be mentioned:
US 5193481, which discloses a fish pen having a double net wall with tensioning devices arranged to the outside of the nets.

WO2017/153417 which describes a fish pen with a submersible collar. The pen can be arranged with a double net.

NO 337333, which discloses a fish pen having vertical tensioned anchorage coupled to an anchor on the sea bed.

WO0165925, which is disclosing a device for raising and lowering a fish pen.

US 6230646, which is describing a deep-water fish farming facility anchored fixedly on the sea bed.

WO 2014032199, which is disclosing a floating cage for aqua culture. The cage is kept under water using a load.

NO 20120807, which is describing a fish pen for removing sea lice or other treatment of fish. The fish pen comprises a sea lice protection skirt which envelop the fish pen, and which can be raised and lowered, depending on if a closed fish pen is needed or not.

NO333479, which is disclosing a small-meshed fluid permeable net which envelope a fish pen and which isolates the fish pen from undesired organisms. The fluid permeable net extends down along the depth direction of the fish pen, and creates a skirt around the fish pen. The skirt comprises buoyancy elements in the upper edge, and a load in the lower most edge.

WO2011133045 which is describing a floating closed fish pen having two separate walls. The outer wall is not permeable to water, while the inner wall is water permeable.

The publication "Ny lukket merd for postsmolt-produksjo", Kyst (http://kyst.no/nyheter/ny-lukket-merd-for-postsmolt-produksjon/) (02.05.2014) concerns a closed floating fish pen having a double wall.

Norway Royal Salmon: "Arctic Offshore Farming", published 17 March 2016 in YouTube shows images of similar floating fish pens. (https://www.youtube.com/watch?v=V10N7NMHL5s)

Other references, relevant for background, include
AU 2014201866
WO2006/063412
CN103026991
US 2016/183501
JP2015 173627
WO 93/04576

### Object of the present invention

An object of the invention is to provide a fish pen with a double net wall, in which the net walls are kept separated from each other by spreading the net walls out from each other with a downward pulling force, wherein the lower part of the net walls are attached to their own bottom cone, which are connected at a distance from each other. A winch mounted on the sea bed, possibly a load pulling down on the bottom cones.

Another purpose of the invention is to provide a closed fish pen with a roof construction providing easy access to the fish pen.

### Brief summary of the invention

A fish pen according to the invention comprises a buoyant collar in the form of a floating circular construction. According to one aspect, the buoyant collar is made from sections of steel pipe welded together. The buoyant collar may alternatively be made from plastic material. It can also be made from pipes or beams assembled in a truss work of a metal or plastic material. The buoyant collar can have a suitable diameter convenient for aqua culture, e.g. a diameter of 30-100 meters. The buoyant collar provides the fish pen with buoyancy. According to one aspect, the buoyant collar is equipped with a walkway around its circumference.

Two net bags having substantially cylindrical intermediate parts are attached at their upper edges to the buoyant collar, concentrically to each other, but in different heights. Alternatively, the inner net bag can be shorter than the outer net bag. At the lower part of the cylindrical intermediate parts, the net bags are attached to a bottom ring maintaining the intermediate parts in a cylindrical form.

Each net bag has a lower, conical part with a pointed end. The ends of each net bag are attached to their own bottom cone, which are connected in a certain distance, e.g. 50 to 500 cm. The lowermost bottom cone has an attachment point for connection to a winch which pulls the net bags towards the sea bed

The net bags have integrated tension ropes extending from the buoyant collar to the bottom cones. The tension ropes transfer forces between the buoyant collar and bottom cone arising because of the pulldown. According to one aspect, the tension ropes may be fiber ropes having a typical diameter of 30 to 70 mm. Alternatively, the tension ropes may be made from wire or chains. When the bottom cones are pulled down by a winch the net bags are brought into tension, which spread out the net walls from each other in a certain distance decided by the distance between the bottom cones, e.g. 0,5-3 meters.

Mounted on the buoyant collar is a roof construction which comprises several elongated arms attached at their lower ends to the buoyant collar, and at their upper ends to a circular frame. The arms extend from the buoyant collar to the circular frame, and create a substantially conical top. Net sections, hereinafter the "roof nets", continue from the net bags and are suspended from the arms; and, thus, create a substantially conical roof on the fish pen. The roof nets can be provided in one single layer, or, preferably two layers. The lower part of the roof nets is attached to the buoyant collar, and upper part of the circular frame.

According to one aspect, the arms are mounted such that an open access zone is formed between two arms providing access to the interior of the fish pen. According to one aspect, the roof nets are in this access zone provided with a zipper such that the roof can be opened, e.g. to be able to pump fish from the fish pen to a well boat. The circular frame forms an air-filled dome over the fish pen which gives the fish access to a water surface when the fish pen is pulled down.

The invention is characterized by features provided in the characteristic part of the following claim 1. The preferred embodiments are specified in the dependent claims.

### Description of the Figures

The invention is disclosed further with reference to the appended drawings, wherein:
Figure 1 shows a perspective outline of the fish pen according to the invention.
Figure 2 shows a lateral outline of an alternative fish pen not according to the invention.
Figures 3 and 4 show a detailed perspective outline showing the roof nets and the net bags attached to the buoyant collar.
Figure 5 shows a perspective outline of the lower part of the net bags attached to the bottom cones.
Figure 6 shows a perspective outline of the bottom cones.
Figure 7 shows a lateral outline of the fish pen, and shows double roof and walkway around the buoyant collar.
Figure 8 shows a well boat positioned at the fish pen, e.g. for pumping fish out of the fish pen, and the zippers around the periphery of the roof in an access zone.
Figure 9 shows a perspective outline of the buoyant collar and the bottom ring.

### Detailed description

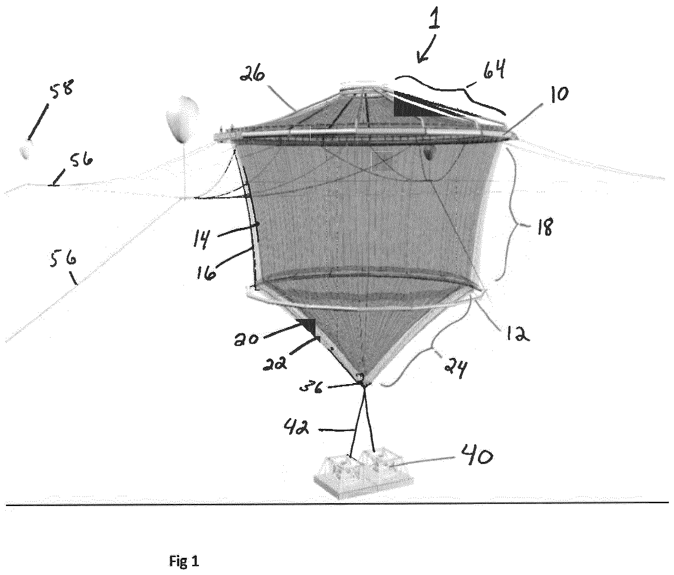

As shown in Figure 1, the fish pen 1 comprises a buoyant collar 10 and a bottom ring 12 arranged in a certain distance under the buoyant collar 10. The floating collar 10 is preferably made from steel pipes, and provides buoyancy to the fish pen. Arranged between the buoyant collar 10 and the bottom ring 12 are two substantially cylindrical net bags, an inner net bag 14 and an external net bag 16, which together form a substantially cylindrical intermediate part 18. At the lower end of the net bags are arranged two substantially conical bottom nets, in extension of the cylindrical net bags - an inner bottom net 20, and external bottom net 22, which together form a conical lower part 24. A roof construction 26 is arranged on top the buoyant collar 10.

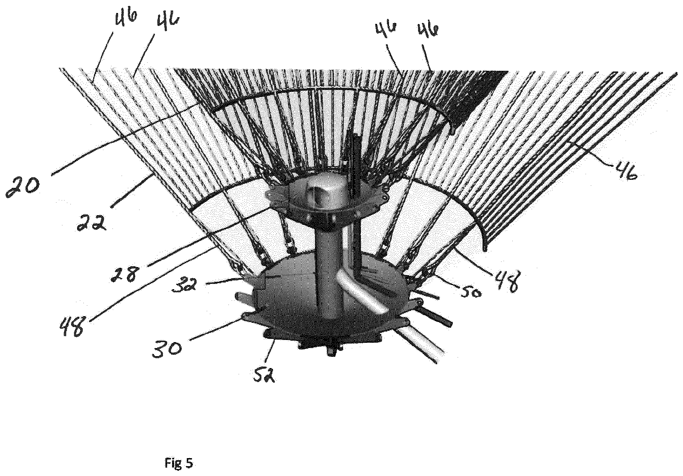

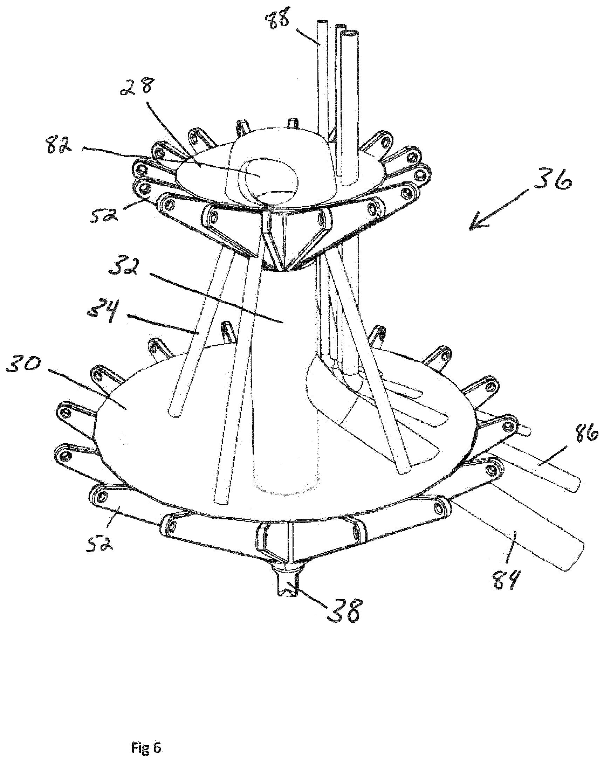

The lower most part of each bottom net 20, 22 is connected to a separate bottom cone. Inner bottom net 20 is attached to an upper bottom cone 28, and the external bottom net 22 is attached to a lower bottom cone 30, as shown in Figure 5. The bottom cones are attached to each other in a certain distance using a distance post 32, as shown in Figure 6. According to one aspect, several supporting arms 34 can be arranged between the bottom cones, as shown in Figure 6. The two bottom cones and the distance post together form a pull-down body 36 having an upper attachment point and a lower attachment point. The pull-down body 36 has an attachment point 38 on its lower part.

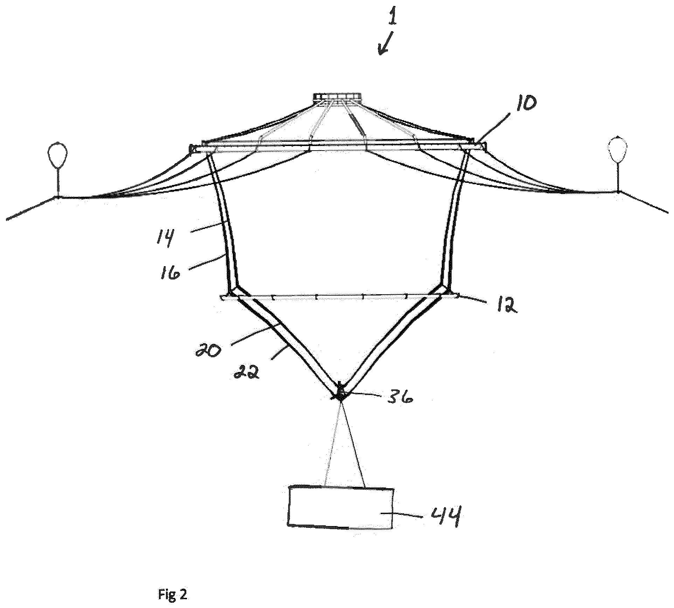

As shown in Figure 1, a winch 40 is mounted on the sea bed, arranged under the fish pen 1. A winch cable 42 extends from winch 40 to the pull-down body 36. The winch acts against the buoyancy of the buoyant collar 10, and pulls down the fish pen 1. When the winch is pulling down on the pull-down body 36, the net bags 14, 16 and the bottom nets 20, 22 are tensioned. This causes the external nets 16, 22 to be spread out from the inner nets14, 20, and they are held separated from each other. In an alternative non-claimed embodiment, the winch 40 may be substituted by a load 44, as shown in Figure 2. The bottom ring 12 ensures that the intermediate part 18 is held in a substantially cylindrical form. The fish pen can be pulled down such that the buoyant collar 10 is pulled down beneath the surface, or is submitted to sufficient pull-down such that the net bags are spread out from each other, while the buoyant collar remains on the surface.

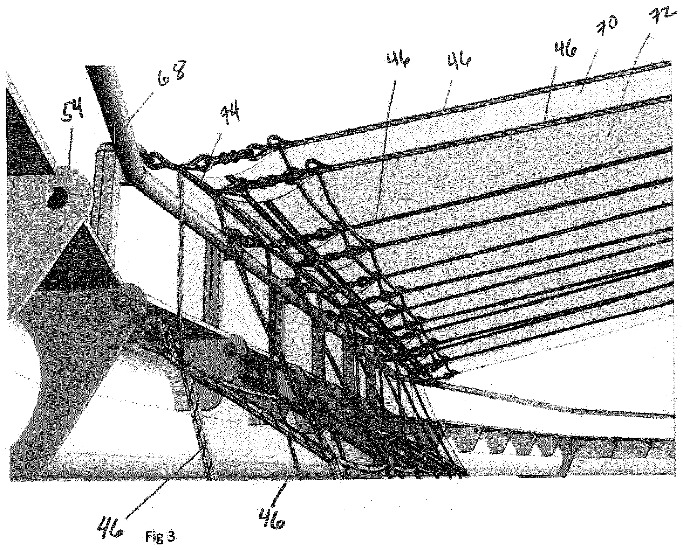

Due to the sizes of the fish pens, the force from the pull-down is very high; e.g., up to 250 metric tons. Common net materials do not withstand such a load. Consequently, the nets are equipped with integrated tension ropes which absorb the loads from the pull-down. Several of the tension ropes 46 have an extension 48 with attachment device 50, which is connected to corresponding attachment devices 52 onto the bottom cones and the buoyant collar, respectively, as shown in Figures 3, 4, 5, and 6.

As shown in Figure 1, fish pen 1 is anchored in the sea using several anchoring ropes 56, preferably arranged with several buoys 58.

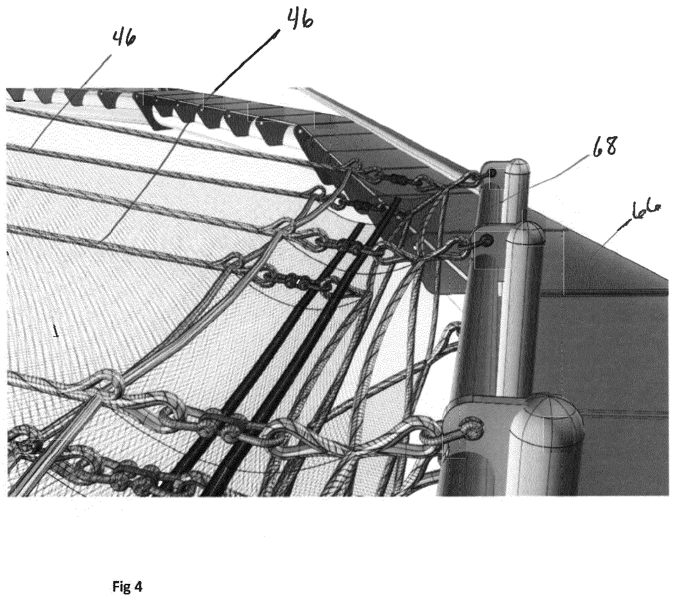

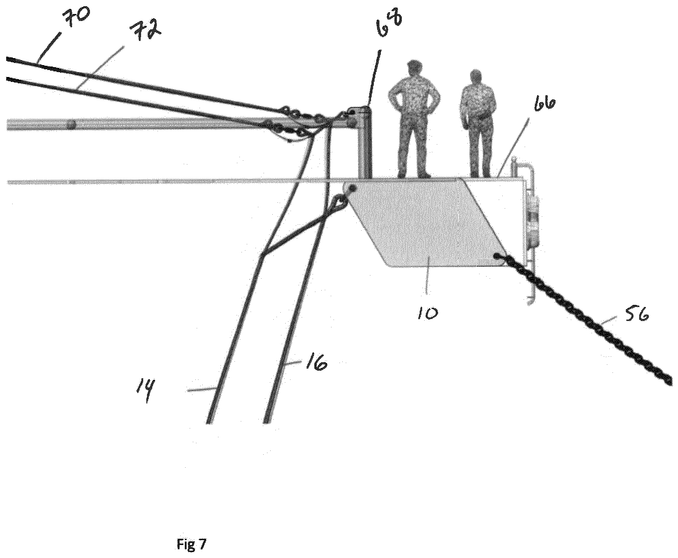

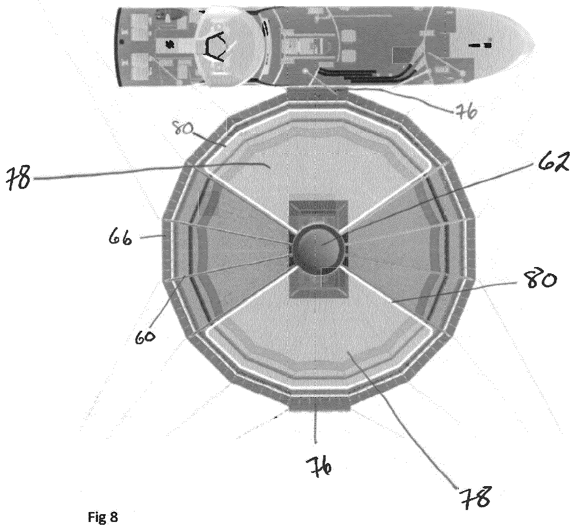

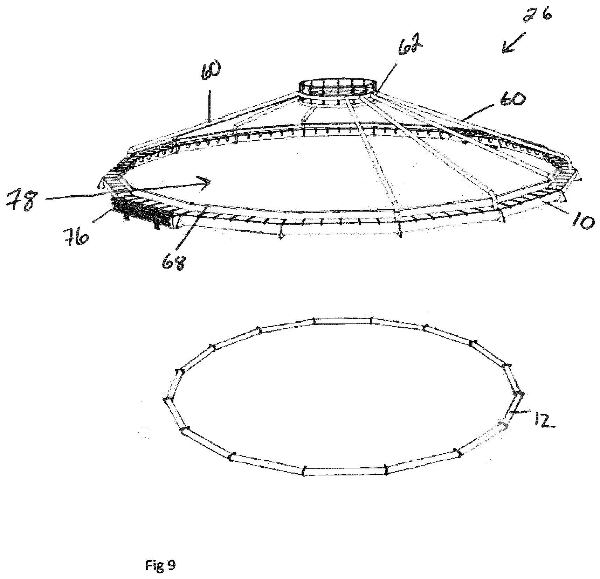

As shown in Figure 1, the fish pen is equipped with a roof construction 26. Roof construction 26 is shown in detail in Figures 8 and 9. Roof construction 26 comprises several elongated arms 60, which extend upward in an angle from the buoyant collar 10 to a circular frame 62, to form a substantially conical top part 64. The roof construction 26 comprises another walkway 66 up onto buoyant collar 10, with a railing 68. One, or preferably two, roof nets, e.g., an external roof net 70 and an inner roof net 72, are placed onto or suspended from the arms 60 for providing a roof on top the fish pens, as shown in Figures 1, 3, and 7, preferably in the extension of the net bags 14, 16. As shown I Figures 3 and 4, the roof nets can be attached to the railing 68. In the case wherein two roof nets are used, these are kept separated using a spacer rope 74. The circular frame 62 has a tight top, and forms an air dome trapping air when the fish pen is pulled down beneath the surface by the winch. Thus, the fish have access to air even when the fish pen has been pulled beneath the surface.

According to one aspect og the invention, the fish pen 1 offers easy access to the inside of the fish pen, e.g., when a well boat is docked alongside the facility for pumping fish, as shown in Figure 8. Consequently, the buoyant collar 10 is equipped with one or more ship landing areas 76. As shown in Figures 8 and 9, two of the arms 60 are arranged in a distance to each other to form one or more access zones 78. The roof nets in the access zone 78 are equipped with a zipper 80 around the circumference, as shown in Figure 8. Thus, the roof nets are easy to open for access to the inside of the fish pen.

As shown in Figure 6, according to one aspect, the distance post 32 of the pull-down body 36 is a cylindrical pipe, having an opening 82 arranged above the upper bottom cone 28. A hose or a pipe 84 is connected to distance post 32. Opening 82 functions as a suction inlet for sucking out dead fish or waste. The pull-down body 36 may further comprise a supply pipe 86 for supplying food, and power/signal cables 88.

## Claims

1. A fish pen arrangement comprising a fish pen (1) having a double net wall comprising an inner net bag (14) and an external net bag (16), the inner net bag having an inner bottom net (20) and the external net bag having an external bottom net (22),
wherein a lower part of the inner bottom net (20) and a lower part of the external bottom net (22) are attached to a common pulldown body (36) arranged therebetween, the pulldown body having an upper attachment point (28) and a lower attachment point (30) having a certain distance between each other,
wherein the fish pen (1) comprises a circular buoyant collar (10), a circular bottom ring (12) arranged under the buoyant collar (10 ), the inner net bag (14) and the external net bag (16) are substantially cylindrical and arranged between the buoyant collar (10) and the bottom ring (12), the inner bottom net (20) is substantially conical and arranged as an extension of inner net bag (14), the lower, external bottom net (22) is substantially conical and arranged as an extension of external net bag (16), and wherein the upper attachment point (28) of the pulldown body is attached to the pointed end of bottom net (20) and the lower attachment point (30) is attached to the pointed end of the bottom net (22),
and wherein the fish pen arrangement comprises a winch (40) mounted on the sea bed and a winch cable (42) extending from the winch to the pull-down body, arranged to apply a downward force on the pulldown body, thereby tensioning the net bags such that the external nets are spread out from the inner nets.

2. Fish pen arrangement according to claim 1,
**characterized in that** the net bags (14, 16, 20, 22) have integrated tension ropes (46) arranged to absorb the tension forces from the winch (40).

3. Fish pen arrangement according to one of the preceding claims,
**characterized in that** the upper and lower attachment points of pulldown body (36) comprises an upper bottom cone (28) and a lower bottom cone (30) separated by a distance post (32), the distance post in the form of
a pipe, having an opening (80) above the upper bottom cone (28), which pipe is connected to a suction hose (84), which pipe is arranged to suck in waste from the fish pen (1).

4. Fish pen arrangement according to one of the preceding claims,
**characterized in that** the fish pen (1) further comprises a substantially conical roof construction (26) comprising several elongated arms (60) attached on their lower ends to the buoyant collar (10), and on their upper ends to a circular frame (62), and wherein one or two roof nets (70, 72) are arranged on top of or suspended from the arms (60) to form roofing on the fish pen (1).

5. Fish pen arrangement according to claim 4,
**characterized in that** the circular frame (62) is tight, and arranged to form an air-filled dome trapping air in the case the fish pen (1) is pulled beneath the surface.

6. Fish pen arrangement according to one of claims 4 or 5, **characterized in that** at least two of the arms (60) are arranged in a distance to each other to form a access zone (78), and wherein the roof nets (70, 72) in the access zone are equipped with a zipper (80).

7. Fish pen arrangement according to one of the preceding claims, **characterized in that** the buoyant collar (10) comprises a walkway (66).

8. A method of arranging a fish pen, comprising the steps of:
a. providing a fish pen arrangement according to one of claims 1-7,
b. connecting the inner net bag and the external net bags to the buoyant collar,
c. connecting the winch mounted on the seabed to the pulldown body,
d. activating the winch to pull down the fish pen., whereby the inner and external net bags are placed under tension and separated from each other.

## Patentansprüche

1. Fischgehegeanordnung, umfassend ein Fischgehege (1) mit einer doppelten Netzwand, die einen inneren Netzbeutel (14) und einen äußeren Netzbeutel (16) umfasst, wobei der innere Netzbeutel ein inneres Bodennetz (20) aufweist und der äußere Netzbeutel ein äußeres Bodennetz (22) aufweist, wobei ein unterer Teil des inneren Bodennetzes (20) und ein unterer Teil des äußeren Bodennetzes (22) an einem gemeinsamen, dazwischen angeordneten Absenkkörper (36) befestigt sind, wobei der Absenkkörper einen oberen Befestigungspunkt (28) und einen unteren Befestigungspunkt (30) aufweist, die einen bestimmten Abstand zueinander aufweisen, wobei das Fischgehege (1) einen kreisförmigen Auftriebskragen (10), einen kreisförmigen Bodenring (12), der unter dem Auftriebskragen (10) angeordnet ist, umfasst, der innere Netzbeutel (14) und der äußere Netzbeutel (16) im Wesentlichen zylindrisch sind und zwischen dem Auftriebskragen (10) und dem Bodenring (12) angeordnet sind, das innere Bodennetz (20) im Wesentlichen konisch ist und als Verlängerung des inneren Netzbeutels (14) angeordnet ist, das untere, äußere Bodennetz (22) im Wesentlichen konisch ist und als Verlängerung des äußeren Netzbeutels (16) angeordnet ist, und wobei der obere Befestigungspunkt (28) des Absenkkörpers an dem spitzen Ende des Bodennetzes (20) befestigt ist und der untere Befestigungspunkt (30) an dem spitzen Ende des Bodennetzes (22) befestigt ist,
und wobei die Fischgehegeanordnung eine Winde (40), die an dem Meeresboden montiert ist, und ein Windenseil (42), das sich von der Winde zu dem Absenkkörper erstreckt, umfasst, das angeordnet ist, um eine nach unten gerichtete Kraft auf den Absenkkörper auszuüben, und dadurch die Netzbeutel so gespannt werden, dass die äußeren Netze von den inneren Netzen gespreizt werden.

2. Fischgehegeanordnung nach Anspruch 1,
**dadurch gekennzeichnet, dass** die Netzbeutel (14, 16, 20, 22) integrierte Zugseile (46) aufweisen, die angeordnet sind, um die Zugkräfte von der Winde (40) aufzunehmen.

3. Fischgehegeanordnung nach einem der vorhergehenden Ansprüche,
**dadurch gekennzeichnet, dass** die oberen und unteren Befestigungspunkte des Absenkkörpers (36) einen oberen Bodenkonus (28) und einen unteren Bodenkonus (30) umfassen, die durch einen Abstandspfosten (32) getrennt sind, wobei der Abstandspfosten in Form eines Rohrs ist, mit einer Öffnung (80) über dem oberen Bodenkonus (28), wobei das Rohr mit einem Saugschlauch (84) verbunden ist, wobei das Rohr angeordnet ist, um Abfälle aus dem Fischgehege (1) anzusaugen.

4. Fischgehegeanordnung nach einem der vorhergehenden Ansprüche,
**dadurch gekennzeichnet, dass** das Fischgehege (1) ferner eine im Wesentlichen konische Dachkonstruktion (26) umfasst, die mehrere längliche Arme (60) umfasst, die an ihren unteren Enden an dem Auftriebskragen (10) und an ihren oberen Enden an einem kreisförmigen Rahmen (62) befestigt sind, und wobei ein oder zwei Dachnetze (70, 72) oben auf den Armen (60) angeordnet oder von diesen aufgehängt sind, um eine Dachdeckung auf dem Fischgehege (1) zu bilden.

5. Fischgehegeanordnung nach Anspruch 4,
**dadurch gekennzeichnet, dass** der kreisförmige Rahmen (62) fest ist und angeordnet ist, um eine luftgefüllte Kuppel zu bilden, die Luft einfängt, falls das Fischgehege (1) unter die Oberfläche gezogen wird.

6. Fischgehegeanordnung nach einem der Ansprüche 4 oder 5,
**dadurch gekennzeichnet, dass** mindestens zwei der Arme (60) in einem Abstand zueinander angeordnet sind, um eine Zugangszone (78) zu bilden, und wobei die Dachnetze (70, 72) in der Zugangszone mit einem Reißverschluss (80) ausgestattet sind.

7. Fischgehegeanordnung nach einem der vorhergehenden Ansprüche,
**dadurch gekennzeichnet, dass** der Auftriebskragen (10) einen Gehweg (66) umfasst.

8. Verfahren zum Anordnen eines Fischgeheges, umfassend die folgenden Schritte:
a. Bereitstellen einer Fischgehegeanordnung nach einem der Ansprüche 1 bis 7,
b. Verbinden des inneren Netzbeutels und der äußeren Netzbeutel mit dem Auftriebskragen,
c. Verbinden der an dem Meeresboden montierten Winde mit dem Absenkkörper,
d. Aktivieren der Winde, um das Fischnetz herunterzuziehen, wodurch die inneren und äußeren Netzbeutel unter Spannung gesetzt und voneinander getrennt werden.

## Revendications

1. Agencement d'enclos à poissons comprenant un enclos à poissons (1) comportant une double paroi de filet comprenant un sac de filet interne (14) et un sac de filet externe (16), le sac de filet interne comportant un filet de fond interne (20) et le sac de filet externe comportant un filet de fond externe (22), une partie inférieure du filet de fond interne (20) et une partie inférieure du filet de fond externe (22) étant fixées à un corps de descente commun (36) agencé entre eux, le corps de descente comportant un point de fixation supérieur (28) et un point de fixation inférieur (30) possédant une certaine distance entre eux, ledit enclos à poissons (1) comprenant un collier flottant circulaire (10), un anneau de fond circulaire (12) agencé sous le collier flottant (10), le sac de filet interne (14) et le sac de filet externe (16) étant sensiblement cylindriques et agencés entre le collier flottant (10) et l'anneau de fond (12), ledit filet de fond interne (20) étant sensiblement conique et agencé en tant qu'extension du sac de filet interne (14), ledit filet de fond externe inférieur (22) étant sensiblement conique et agencé sous la forme d'une extension du sac de filet externe (16), et ledit point de fixation supérieur (28) du corps de descente étant fixé à l'extrémité pointue du filet de fond (20) et le point de fixation inférieur (30) étant fixé à l'extrémité pointue du filet de fond (22),
et ledit agencement d'enclos à poissons comprenant un treuil (40) monté sur le fond marin et un câble (42) de treuil s'étendant à partir du treuil jusqu'au corps de descente, agencé pour appliquer une force vers le bas sur le corps de descente, tendant ainsi les sacs de filet de sorte que les filets externes soient écartés des filets internes.

2. Agencement d'enclos à poissons selon la revendication 1,
**caractérisé en ce que** les sacs de filet (14, 16, 20, 22) possèdent des cordes de tension intégrées (46) agencées pour absorber les forces de tension du treuil (40).

3. Agencement d'enclos à poissons selon l'une des revendications précédentes,
**caractérisé en ce que** les points de fixation supérieur et inférieur du corps de descente (36) comprennent un cône de fond supérieur (28) et un cône de fond inférieur (30) séparés par un poteau d'écartement (32), le poteau d'écartement en forme de tuyau, comportant une ouverture (80) au-dessus du cône de fond supérieur (28), lequel tuyau est raccordé à un tuyau d'aspiration (84), lequel tuyau est agencé pour aspirer les déchets de l'enclos à poissons (1).

4. Agencement d'enclos à poissons selon l'une des revendications précédentes,
**caractérisé en ce que** l'enclos à poissons (1) comprend en outre une construction de toit sensiblement conique (26) comprenant plusieurs bras allongés (60) fixés sur leurs extrémités inférieures au collier flottant (10), et sur leurs extrémités supérieures à un cadre circulaire (62), et un ou deux filets (70, 72) de toit étant agencés sur le dessus ou suspendus aux bras (60) pour former une toiture sur l'enclos à poissons (1).

5. Agencement d'enclos à poissons selon la revendication 4,
**caractérisé en ce que** le cadre circulaire (62) est serré et agencé pour former un dôme rempli d'air piégeant l'air dans le cas où l'enclos à poissons (1) est tiré sous la surface.

6. Agencement d'enclos à poissons selon l'une des revendications 4 ou 5,
**caractérisé en ce qu'**au moins deux des bras (60) sont agencés à une distance l'un de l'autre pour former une zone d'accès (78), et lesdits filets (70, 72) de toit dans la zone d'accès étant équipés d'une fermeture à glissière (80).

7. Agencement d'enclos à poissons selon l'une des revendications précédentes,
**caractérisé en ce que** le collier flottant (10) comprend une passerelle (66).

8. Procédé d'agencement d'un enclos à poissons, comprenant les étapes de
a. fourniture d'un agencement d'enclos à poissons selon l'une des revendications 1 à 7,
b. raccordement du sac de filet interne et des sacs de filet externes au collier flottant,
c. raccordement du treuil monté sur le fond marin au corps de descente,
d. actionnement du treuil pour tirer vers le bas l'enclos à poissons, moyennant quoi les sacs de filet interne et externe sont placés sous tension et séparés l'un de l'autre.
